# EUROPÄISCHE PATENTANMELDUNG

(11) **EP 4 428 789 A1**
(43) Veröffentlichungstag der Anmeldung: **11.09.2024**
(21) Anmeldenummer: 23161101.3
(22) Anmeldetag: 10.03.2023
(51) Int. Cl.: G06Q 10/0833, G01F 23/80, G06K 19/07, B67D 1/08

(54) **ORTUNGSSYSTEM**

(71) Anmelder: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(57) **Zusammenfassung**

Die Erfindung betrifft ein Ortungssystem (15) für Behälter (3). Die Behälter (3) weisen jeweils wenigstens eine Behälteröffnung (5) zur Zufuhr oder Entnahme von Lagergut auf. Für jeden Behälter (3) ist ein Behälterverschluss (14) vorhanden, der zum Verschließen der Behälteröffnung (5) ausgebildet ist. Im Behälterverschluss (14) oder in einem am Behälterverschluss (14) ausmündenden Tauchrohr (4) ist ein GPS-Tracker (10) vorhanden, welcher zur Bestimmung von Standortinformationen des Behälters (3) ausgebildet ist. Mittels des GPS-Trackers (10) werden die Standortinformationen an ein cloudbasiertes Rechnersystem (16) gesendet.

## Beschreibung

Die Erfindung betrifft ein Ortungssystem und ein Verfahren zur Ortung von Behältern.

Derartige Behälter dienen generell zur Lagerung von Lagergut, insbesondere von Flüssigkeiten. Generell weist der Behälter eine Behälteröffnung auf, über welche das Lagergut aus dem Behälter entnommen bzw. diesem zugeführt werden kann.

Insbesondere können die Behälter Bestandteil eines Entnahmesystems sein.

Ein derartiges Entnahmesystem ist aus der EP 0 977 702 B1 bekannt. Dieses Entnahmesystem dient zum Befüllen und Entleeren von Behältern, insbesondere von Fässern, die mit flüssigen Chemikalien befüllt sind. Die Behälter weisen jeweils ein Tauchrohr auf, über welches im Behälter gelagerte Flüssigkeiten entnommen werden können und über welchen Flüssigkeiten dem Behälter zugeführt werden können. Das Entnahmesystem weist einen Entnahmekopf auf, der am Tauchrohr des jeweiligen Behälters angeschlossen wird.

Über den Entnahmekopf erfolgt dann eine Entnahme von Flüssigkeit aus dem Behälter oder gegebenenfalls auch eine Zufuhr von Flüssigkeit. Hierzu wird über den Entnahmekopf eine Pumpe angeschlossen, um die Entnahme oder Zufuhr von Flüssigkeit vorzunehmen.

Ist die Entnahme oder Zufuhr von Flüssigkeit abgeschlossen, wird die Behälteröffnung des jeweiligen Behälters mit einem Verschlussmittel verschlossen. Damit steht der Behälter für einen Transport bereit. Der Behälter kann dann beispielsweise zu einem Einsatzort, wo die Flüssigkeit zur Durchführung von Arbeitsvorgängen benötigt wird, oder zu einem Lagerort transportiert werden.

Eine wesentliche Aufgabe hierbei besteht in einer effektiven Objektverfolgung, d.h. Behälter sollen während ihres Transports fortlaufend lokalisiert werden können, um Transportvorgänge zu kontrollieren, Fehlleitungen von Behältern rechtzeitig erfassen und korrigieren zu können und auch um verlorengegangene Behälter wieder auffinden zu können.

Der Erfindung liegt die Aufgabe zugrunde ein einfaches und effizientes Ortungssystem für Behälter eines Entnahmesystems bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Ortungssystem für Behälter. Die Behälter weisen jeweils wenigstens eine Behälteröffnung zur Zufuhr oder Entnahme von Lagergut auf. Für jeden Behälter ist ein Behälterverschluss vorhanden, der zum Verschließen der Behälteröffnung ausgebildet ist. Im Behälterverschluss oder in einem am Behälterverschluss ausmündenden Tauchrohr ist ein GPS-Tracker vorhanden, welcher zur Bestimmung von Standortinformationen des Behälters ausgebildet ist. Mittels des GPS-Trackers werden die Standortinformationen an ein cloudbasiertes Rechnersystem gesendet.

Die Behälteröffnungen der Behälter werden mit dem einem Behälterverschluss verschlossen und bilden dann transportable Einheiten. Dabei kann generell jeder Behälter mehrere Behälteröffnungen aufweisen, die jeweils mit einem Behälterverschluss verschlossen werden können.

Erfindungsgemäß ist im Behälterverschluss jedes Behälters ein GPS-Tracker vorhanden, mit dem eine Ortung des Behälters ermöglicht wird. Der GPS-Tracker stellt ein Funknavigationssystem dar, welches Satelliteninformationen zur Standortbestimmung auswertet. Die so per GPS (globales Positionsbestimmungssystem) ermittelten Standortinformationen werden vom GPS-Tracker an ein cloudbasiertes Rechnersystem gesendet.

Im cloudbasierten Rechnersystem erfolgt eine Speicherung und Auswertung der Standortinformationen einzelner Behälter. Über das cloudbasierte Rechnersystem werden die Standortinformationen einem Benutzer zur Verfügung gestellt.

Die Standortbestimmung erfolgt dabei zeitabhängig, so dass ein Benutzer den jeweiligen Behälter, insbesondere während seines Transports, genau verfolgen kann.

Gemäß einer ersten Variante der Erfindung ist der GPS-Tracker in einem Behälterverschluss integriert, mit dem die Behälteröffnung des jeweiligen Behälters verschlossen wird. Der GPS-Tracker ist damit unverlierbar mit dem Behälter verbunden. Dabei ist besonders vorteilhaft, dass der GPS-Tracker in dem zum Behälter gehörenden Behälterverschluss integriert werden kann, d.h. es muss keine separate Baueinheit am Behälter angeordnet werden. Dies hat einerseits den Vorteil, dass der konstruktive Aufwand zur Integration des GPS-Trackers im Behälter gering gehalten werden kann, da hierfür mit dem Behälterverschluss eine bereits existierende Behälterkomponente genutzt werden kann.

Ein weiterer Vorteil der Integration des GPS-Trackers im Behälterverschluss besteht darin, dass auf separaten Baueinheiten an der Außenseite verzichtet werden kann. Derartige außenliegende Baueinheiten können beim Transport des Behälters leicht beschädigt oder sogar abgerissen werden. Derartige Probleme werden durch die Integration des GPS-Trackers im Behälterverschluss vermieden.

Durch die Integration des GPS-Trackers im Behälterverschlusses wird eine hohe Manipulationssicherheit erzielt, da kein unbefugter Zugriff auf den GPS-Tracker möglich, ist und durch die feste Zuordnung des Behälterverschlusses auch eine feste Zuordnung des GPS-Tracker zum Behälter gegeben ist.

Besonders vorteilhaft ist die Verbindung des Behälterverschlusses mit dem Behälter durch eine Originalitätssicherung gesichert. Ein Entfernen des Behälterverschlusses ist dann nur durch Zerstörung der Originalitätssicherung möglich.

Gemäß einer vorteilhaften Ausgestaltung der Erfindung sind die Behälter Bestandteil eines Entnahmesystems.

In diesem Fall ist typisch, dass in jedem Behälter ein an der Behälteröffnung ausmündendes Tauchrohr vorhanden ist. Das Tauchrohr ist an seiner Ausmündung an der Behälteröffnung mit einem Behälterverschluss bildenden Tauchrohrverschluss abschließbar.

Der GPS-Tracker kann dann gemäß der zweiten Variante der Erfindung im Tauchrohr integriert sein.

Das Entnahmesystem weist einen an die Behälteröffnung eines Behälters anschließbaren Entnahmekopf auf. Über den Entnahmekopf ist Lagergut aus dem Behälter entnehmbar oder diesem zuführbar.

Das Lagergut ist dann typisch von einer Flüssigkeit gebildet.

Gemäß einer vorteilhaften Ausführungsform ist der GPS-Tracker in einer Kapselung des Behälterverschlusses angeordnet.

Die Kapselung ist vorteilhaft flüssigkeitsdicht und gasdicht, so dass der GPS-Tracker in der Kapselung geschützt ist, insbesondere gegen einen Kontakt mit dem im Behälter gelagerten Lagergut.

Im jeweiligen Behälter können aggressive, gefahrbringende Chemikalien gelagert sein. Insbesondere wird in den Behältern Lagergut in Form von Flüssigkeiten gelagert.

Derartige Flüssigkeiten können insbesondere von Chemikalien gebildet sein, die zur Durchführung von Arbeitsprozessen, insbesondere in der Halbleiterindustrie, benötigt werden.

Durch die Kapselung der Sensoreinheit wird verhindert, dass die im Behälter gelagerte Chemikalien die Komponenten der Sensoreinheit angreifen und beschädigen.

Vorteilhaft ist dem GPS-Tracker eine SIM-Karte für den Zugang zu einem Mobilfunknetz zugeordnet. Zudem kann zur Bereitstellung einer autarken Energieversorgung dem GPS-Tracker ein Akkumulator zugeordnet sein. Diese Komponenten sind mit dem GPS-Tracker in der Kapselung angeordnet, so dass diese eine kompakte Baugruppe bilden, die als Gesamtheit in der Kapselung gegen äußere Einflüsse geschützt ist. In der Kapselung kann auch ein induktives Ladegerät vom Laden des Akkumulators vorhanden sein.

Gemäß einer vorteilhaften Weiterbildung der Erfindung sind in der Kapselung ein Temperatursensor, ein Füllstandssensor und/oder ein Sensor zur Erfassung von Erschütterungen angeordnet.

Vorteilhaft werden die Standortinformationen über das Internet gesendet.

Dabei werden zweckmäßig die Standortinformationen über ein Mobilfunknetz gesendet, wobei über die SIM-Karte, die einem GPS-Tracker zugeordnet ist, der Zugang zum Mobilfunknetz ermöglicht wird.

Gemäß einer vorteilhaften Ausführungsform wird mit den Standortinformationen eines Behälters eine Kennung des jeweiligen Behälters gesendet. In dem cloudbasierten Rechnersystem wird eine Standortinformation eines Behälters zusammen mit der Kennung des Behälters gespeichert.

In dem cloudbasiertes Rechnersystem erfolgt für die einzelnen mit Kennungen gekennzeichneten Behältern eine Ortung anhand der zeitabhängig erfassten Standortinformationen.

Die Kennung kann den jeweiligen Behälter eindeutig kennzeichnen.

Eine einen Behälter identifizierende Information, die in der Kennung enthalten ist, kann die Artikel-, Serien- oder Bestellnummer eines Behälters sein.

Weiterhin kann mittels der Kennung das im Behälter vorhandene Lagergut identifiziert werden.

Die Kennung kann dann die Spezifikation des im Behälter gelagerten Lagerguts, insbesondere Flüssigkeiten, enthalten.

Die Kennung kann vorteilhaft in einem RFID-Chip gespeichert sein, der im Behälterverschluss vorhanden ist. Anstelle eines RFID-Chips kann auch ein NFC-Lesegerät zum Auslesen abgespeicherter Kennungen verwendet werden.

Vorteilhaft werden in dem cloudbasierten Rechnersystem gespeicherte Standortinformationen von Behältern mittels einer Anwendereinheit abgerufen.

Ein Benutzer kann zu beliebigen Zeiten mittels der Anwendereinheit Standortinformationen von Behältern abrufen und so deren Standort zeitabhängig verfolgen. Die Anwendereinheit ist generell von einer Rechnereinheit gebildet. Beispielsweise kann die Anwendereinheit von einem PC, einem Laptop oder einem mobilen Endgerät, wie einem Smartphone, gebildet sein.

Vorteilhaft ist in der Anwendereinheit eine App vorhanden, über welche der Zugang zum cloudbasierten Rechnersystem ermöglicht wird. Dabei kann durch Zugangscodes vorgegeben werden, ob der Benutzer Zugang zu allen im cloudbasierten Rechnersystem gespeicherten Behältern erhält oder nur einer Teilmenge hiervon. Anhand der mit den Standortinformationen gespeicherten Kennungen kann der Benutzer diese eindeutig identifizieren.

Die Erfindung wird im Folgenden anhand der Zeichnungen erläutert. Es zeigen:
- Figur 1:: Schematische Darstellung eines Entnahmesystems mit einem zugeordneten Behälter.
- Figur 2:: Tauchrohr des Behälters gemäß Figur 1 mit einem zugeordneten Tauchrohrverschluss.
- Figur 3:: Darstellung eines Behälters mit einem Behälterverschluss.
- Figur 4:: Blockschaltbild des erfindungsgemäßen Ortungssystems.

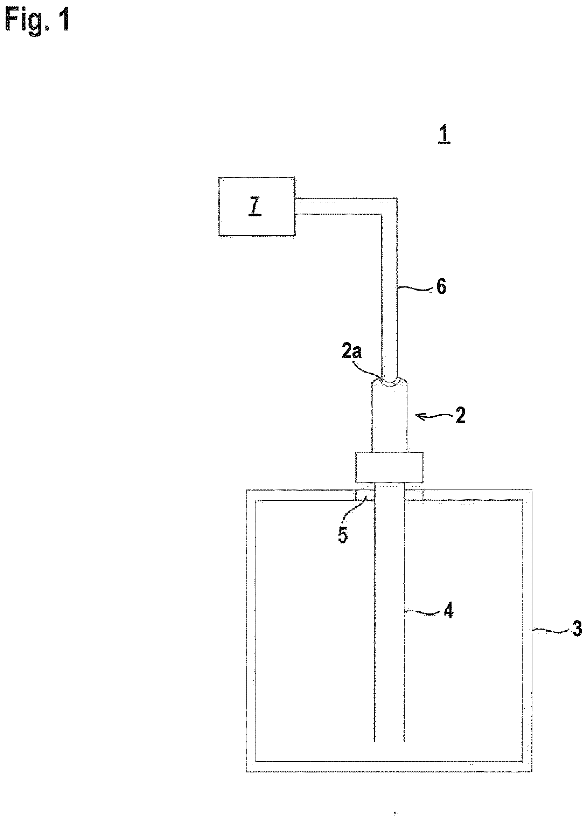

Figur 1 zeigt schematisch ein Entnahmesystem 1. Das Entnahmesystem 1 umfasst einen Entnahmekopf 2, der an einem Behälter 3, der insbesondere fassartig ausgebildet sein kann, angebracht werden kann. In dem Behälter 3 wird eine Flüssigkeit gelagert. Bei in derartigen Behältern 3 gelagerten Flüssigkeiten handelt, es sich insbesondere um flüssige Spezialchemikalien.

Der Behälter 3 weist ein Tauchrohr 4 auf. Das Tauchrohr 4 ist in einem Spundkopf, der in einer Behälteröffnung 5 des Behälters 3 sitzt, gelagert und so fest mit dem Behälter 3 verbunden. Die Längsachse des Tauchrohrs 4 verläuft in vertikaler Richtung.

Der Entnahmekopf 2 dient zur Entnahme von Flüssigkeiten aus dem Behälter 3. Ebenso kann dieser zur Befüllung von Behältern 3 genutzt werden. Hierzu weist der Entnahmekopf 2 an seinem oberen Ende einen Flüssigkeitsanschluss 2a auf. An diesem Flüssigkeitsanschluss 2a wird eine Leitung 6 angeschlossen, die zu einer Pumpe 7 führt. Die Leitung 6 kann in Form eines Schlauchs ausgebildet sein.

Die Pumpe 7 wird von einer nicht dargestellten Steuereinheit gesteuert.

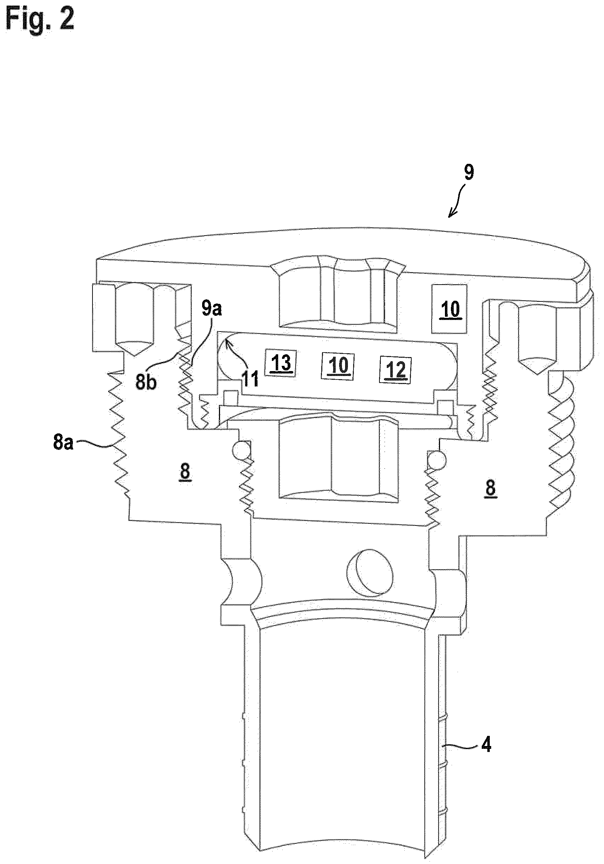

Figur 2 zeigt in einer vergrößerten Teildarstellung den oberen Bereich des Tauchrohrs 4, das an seinem oberen Ende ein Kopfteil 8 aufweist, das in der Behälteröffnung 5 gelagert ist. Im vorliegenden Fall wird das Kopfteil 8 in der Behälteröffnung 5 eingeschraubt. Hierzu weist das Kopfteil 8 ein Außengewinde 9a auf.

Die Öffnung am oberen Ende des Tauchrohrs 4 kann mit einem Tauchrohrverschluss 9 verschlossen werden. Im vorliegenden Fall wird der Tauchrohrverschluss 9 am Tauchrohr 4 festgeschraubt. Hierzu weist der Tauchrohrverschluss 9 ein Außengewinde 9a und das Kopfteil 8 ein korrespondierendes Innengewinde 8b auf. Der mit dem Tauchrohrverschluss 9 verschlossene Behälter 3 bildet eine transportable Einheit.

Im Tauchrohrverschluss 9 ist ein GPS-Tracker 10 angeordnet. Der GPS-Tracker 10 befindet sich in einer vorzugsweise gas- und flüssigkeitsdichten Kapselung 11. Die Kapselung 11 bildet auch einen Explosionsschutz. Mit dem GPS-Tracker 10 sind eine SIM-Karte 12 und ein Akkumulator 13 in der Kapselung 11 angeordnet. Dem Akkumulator 13 kann eine induktive Ladeeinheit zugeordnet sein.

Alternativ kann diese Anordnung im Tauchrohr 4 insbesondere im Kopfteil 8 angeordnet sein. Gemäß einer vorteilhaften Weiterbildung sind in der Kapselung 11 ein Temperatursensor, ein Füllstandssensor und/oder ein Sensor zur Erfassung von Erschütterungen angeordnet.

Der GPS-Tracker 10 ist ein Funknavigationssystem, das anhand von Satelliteninformationen den aktuellen Standort des Tauchrohrverschlusses 9 und damit des Behälters 3 bestimmt. Die SIM-Karte 12 sorgt für einen Anschluss an ein Mobilfunknetz. Der Akkumulator 13 stellt eine einfache Energieversorgung für den GPS-Tracker 10 mit der SIM-Karte 12 dar.

Im Tauchrohrverschluss 9 ist weiterhin ein nicht dargestellter RFID-Chip angeordnet. Im RFID-Chip ist wenigstens eine Kennung abgespeichert, welche den Behälter 3 und/oder das im Behälter 3 gelagerte Lagergut eindeutig kennzeichnet.

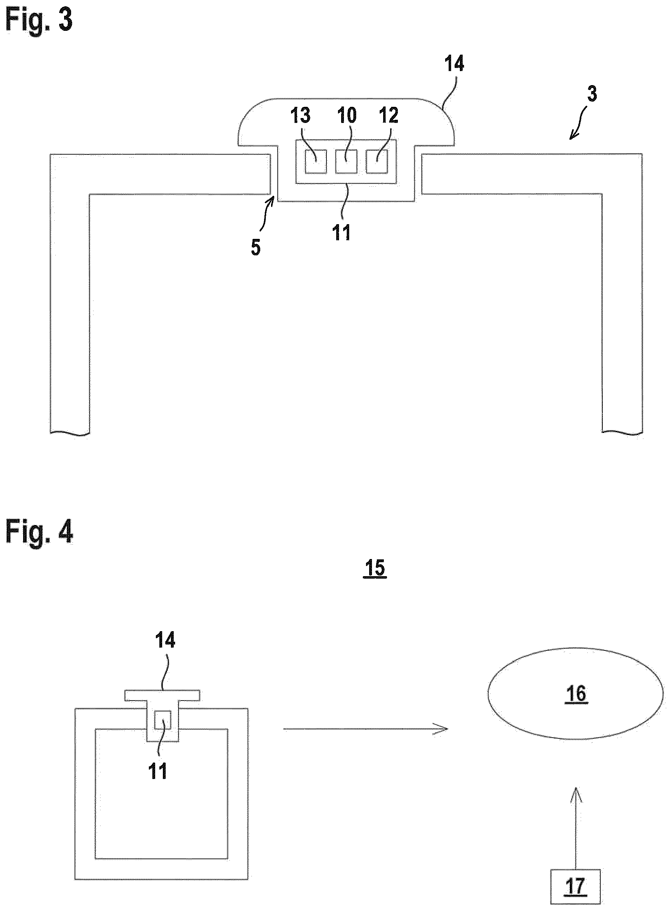

Figur 3 zeigt eine Ausführungsform eines Behälters 3, in welchem kein Tauchrohr 4 vorhanden ist. Die Behälteröffnung 5 des Behälters 3 ist mit einem Behälterverschluss 14 verschlossen. Im Behälterverschluss 14 ist wieder eine Kapselung 11 vorhanden, in welcher der GPS-Tracker 10, die SIM-Karte 12 und der Akkumulator 13 integriert sind. Auch in diesem Fall ist im Behälterverschluss 14 ein nicht dargestellter RFID-Chip vorhanden, in welchem wenigstens eine Kennung gespeichert ist, die den Behälter 3 und/oder das im Behälter 3 gespeicherte Lagergut eindeutig kennzeichnet.

Figur 4 zeigt ein Ausführungsbeispiel des erfindungsgemäßen Ortungssystems 15, bei welchem der Behälter 3 gemäß Figur 3 vorgesehen ist. Natürlich kann das Ortungssystem 15 auch mit dem Behälter 3 des Entnahmesystems 1 der Figuren 1 und 2 ausgebildet sein.

Der GPS-Tracker 10 sendet aktuell ermittelte Standortinformationen zusammen mit der vom RFID-Chip ausgelesenen Kennung über das Internet an eine Cloud d.h. an ein cloudbasiertes Rechnersystem 16. Das Aussenden der Daten erfolgt zweckmäßig über ein Mobilfunknetz.

Die GPS-Tracker 10 der Behälter 3 senden ihre aktuellen Standortinformationen zusammen mit der Kennung des jeweiligen Behälters 3 an das cloudbasierte Rechnersystem 16.

Die Standortinformationen mit den Kennungen werden im cloudbasiertes Rechnersystem 16 abgespeichert und ggf. ausgewertet. Das Ortungssystem 15 kann generell mehrere Behälter 3 umfassen, in deren Behälterverschluss 14 jeweils ein GPS-Tracker 10 vorhanden ist.

Im cloudbasierten Rechnersystem 16 sind dann für alle Behälter 3 die aktuellen Standortinformationen unter den jeweiligen Kennungen gespeichert. Durch die Kennungen können die Standortinformation eindeutig den jeweiligen Behältern 3 zugeordnet werden. Mit den GPS-Trackern 10 werden die Standorte der Behälter 3 zeitabhängig erfasst. Somit kann anhand der Standortinformationen für jeden Behälter 3 dessen Standort zeitabhängig verfolgt werden.

Ein Benutzer kann mit einer Anwendereinheit 17 Standortinformationen von Behältern 3 aus dem cloudbasierten Rechnersystem 16 abrufen und so die Standorte der Behälter 3 zeitabhängig verfolgen. Die Anwendereinheit 17 ist generell eine Rechnereinheit, die von einem PC, einem Laptop, einem Smartphone oder dergleichen gebildet sein kann.

Vorteilhaft ist in der Anwendereinheit 17 eine App vorhanden, über welche der Zugang zum cloudbasierten Rechnersystem 16 ermöglicht wird. Dabei kann durch Zugangscodes vorgegeben werden, ob der Benutzer Zugang zu allen im cloudbasierten Rechnersystem 16 gespeicherten Behältern 3 enthält oder nur zu einer Teilmenge hiervon.

### Bezugszeichenliste

- (1): Entnahmesystem
- (2): Entnahmekopf
- (3): Behälter
- (4): Tauchrohr
- (5): Behälteröffnung
- (6): Leitung
- (7): Pumpe
- (8): Kopfteil
- (9): Tauchrohrverschluss
- (9a): Außengewinde
- (10): GPS-Tracker
- (11): Kapselung
- (12): SIM-Karte
- (13): Akkumulator
- (14): Behälterverschluss
- (15): Ortungssystem
- (16): cloudbasiertes Rechnersystem
- (17): Anwendereinheit

## Patentansprüche

1. Ortungssystem (15) für Behälter (3), wobei die Behälter (3) jeweils wenigstens eine Behälteröffnung (5) zur Zufuhr oder Entnahme von Lagergut aufweisen, **dadurch gekennzeichnet, dass** für jeden Behälter (3) ein Behälterverschluss (14) vorhanden ist, der zum Verschließen der Behälteröffnung (5) ausgebildet ist, und dass im Behälterverschluss (14) oder in einem am Behälterverschluss (14) ausmündenden Tauchrohr (4) ein GPS-Tracker (10) vorhanden ist, welcher zur Bestimmung von Standortinformationen des Behälters (3) ausgebildet ist, und dass mittels des GPS-Trackers (10) die Standortinformationen an ein cloudbasiertes Rechnersystem (16) gesendet werden.

2. Ortungssystem (15) nach Anspruch 1, **dadurch gekennzeichnet, dass** der GPS-Tracker (10) in einer Kapselung (11) des Behälterverschlusses (14) angeordnet ist.

3. Ortungssystem (15) nach einem der Ansprüche 1 oder 2, **dadurch gekennzeichnet**, dem GPS-Tracker (10) eine SIM-Karte (12) und ein Ackumulator (13) zugeordnet sind.

4. Ortungssystem (15) nach Anspruch 3, **dadurch gekennzeichnet, dass** dem Akkumulator (13) eine induktive Ladeeinheit zugeordnet ist.

5. Ortungssystem (15) nach einem der Ansprüche 2 bis 4, **dadurch gekennzeichnet, dass** die SIM-Karte (12) und der Akkumulator (13) und die induktive Ladeeinheit in der Kapselung (11) angeordnet sind.

6. Ortungssystem (15) nach einem der Ansprüche 2 bis 5, **dadurch gekennzeichnet, dass** in der Kapselung (11) ein Temperatursensor, ein Füllstandssensor und/oder ein Sensor zur Erfassung von Erschütterungen angeordnet sind.

7. Ortungssystem (15) nach einem der Ansprüche 1 bis 6, **dadurch gekennzeichnet, dass** in den Behältern (3) Lagergut in Form von Flüssigkeiten gelagert wird.

8. Ortungssystem (15) nach einem der Ansprüche 1 bis 7, **dadurch gekennzeichnet, dass** die Behälter (3) Bestandteil eines Entnahmesystems (1) sind.

9. Ortungssystem (15) nach einem der Ansprüche 1 bis 8, **dadurch gekennzeichnet, dass** das Tauchrohr (4) an seiner Ausmündung an der Behälteröffnung (5) mit einem eines Behälterverschluss (14) bildenden Tauchrohrverschluss (9) abschließbar ist.

10. Ortungssystem (15) nach einem der Ansprüche 1 bis 9, **dadurch gekennzeichnet, dass** das Entnahmesystem (1) einen an die Behälteröffnung (5) eines Behälters (3) anschließbaren Entnahmekopf (2) aufweist, wobei über den Entnahmekopf (2) Lagergut aus dem Behälter (3) entnehmbar oder diesem zuführbar ist.

11. Ortungssystem (15) nach einem der Ansprüche 1 bis 10, **dadurch gekennzeichnet, dass** mit den Standortinformationen eines Behälters (3) eine Kennung des jeweiligen Behälters (3) gesendet wird, wobei in dem cloudbasierten Rechnersystem (16) eine Standortinformation eines Behälters (3) zusammen mit der Kennung des Behälters (3) gespeichert wird.

12. Ortungssystem (15) nach Anspruch 11, **dadurch gekennzeichnet, dass** mittels der Kennung der jeweilige Behälter (3) identifizierbar ist.

13. Ortungssystem (15) nach einem der Ansprüche 11 oder 12, **dadurch gekennzeichnet, dass** mittels der Kennung das im Behälter (3) vorhandene Lagergut identifizierbar ist.

14. Ortungssystem (15) nach einem der Ansprüche 1 bis 13, **dadurch gekennzeichnet, dass** die Standortinformationen über das Internet gesendet werden.

15. Ortungssystem (15) nach einem der Ansprüche 1 bis 14, **dadurch gekennzeichnet, dass** die Standortinformationen über ein Mobilfunknetz gesendet werden.

16. Ortungssystem (15) nach einem der Ansprüche 1 bis 15, **dadurch gekennzeichnet, dass** in dem cloudbasierten Rechnersystem (16) gespeicherte Standortinformationen von Behältern (3) mittels einer Anwendereinheit (17) abgerufen werden.

17. Ortungssystem (15) nach Anspruch 16, **dadurch gekennzeichnet, dass** das Endgerät ein mobiles Endgerät ist.

18. Verfahren zum Betrieb eines Ortungssystems (15) für Behälter (3), wobei die Behälter (3) jeweils wenigstens eine Behälteröffnung (5) zur Zufuhr oder Entnahme von Lagergut aufweisen, **dadurch gekennzeichnet, dass** für jeden Behälter (3) ein Behälterverschluss (14) vorhanden ist, der zum Verschließen der Behälteröffnung (5) ausgebildet ist, und dass im Behälterverschluss (14) oder in einem am Behälterverschluss (14) ausmündenden Tauchrohr (4) ein GPS-Tracker (10) vorhanden ist, welcher zur Bestimmung von Standortinformationen des Behälters (3) ausgebildet ist, und dass mittels des GPS-Trackers (10) die Standortinformationen an ein cloudbasiertes Rechnersystem (16) gesendet werden.

## Geänderte Patentansprüche

### Geänderte Patentansprüche gemäss Regel 137(2) EPÜ.

1. Ortungssystem (15) für Behälter (3), wobei die Behälter (3) jeweils wenigstens eine Behälteröffnung (5) zur Zufuhr oder Entnahme von Lagergut aufweisen, **dadurch gekennzeichnet, dass** für jeden Behälter (3) ein Behälterverschluss (14) vorhanden ist, der zum Verschließen der Behälteröffnung (5) ausgebildet ist, und dass in einer Kapselung (11) des Behälterverschlusses (14) oder in einem am Behälterverschluss (14) ausmündenden Tauchrohr (4) ein GPS-Tracker (10) vorhanden ist, welcher zur Bestimmung von Standortinformationen des Behälters (3) ausgebildet ist, und dass mittels des GPS-Trackers (10) die Standortinformationen an ein cloudbasiertes Rechnersystem (16) gesendet werden.

2. Ortungssystem (15) nach Anspruch 1, **dadurch gekennzeichnet**, dem GPS-Tracker (10) eine SIM-Karte (12) und ein Akkumulator (13) zugeordnet sind.

3. Ortungssystem (15) nach Anspruch 2, **dadurch gekennzeichnet, dass** dem Akkumulator (13) eine induktive Ladeeinheit zugeordnet ist.

4. Ortungssystem (15) nach einem der Ansprüche 1 bis 3, **dadurch gekennzeichnet, dass** die SIM-Karte (12) und der Akkumulator (13) und die induktive Ladeeinheit in der Kapselung (11) angeordnet sind.

5. Ortungssystem (15) nach einem der Ansprüche 1 bis 4, **dadurch gekennzeichnet, dass** in der Kapselung (11) ein Temperatursensor, ein Füllstandssensor und/oder ein Sensor zur Erfassung von Erschütterungen angeordnet sind.

6. Ortungssystem (15) nach einem der Ansprüche 1 bis 5, **dadurch gekennzeichnet, dass** in den Behältern (3) Lagergut in Form von Flüssigkeiten gelagert wird.

7. Ortungssystem (15) nach einem der Ansprüche 1 bis 6, **dadurch gekennzeichnet, dass** die Behälter (3) Bestandteil eines Entnahmesystems (1) sind.

8. Ortungssystem (15) nach einem der Ansprüche 1 bis 7, **dadurch gekennzeichnet, dass** das Tauchrohr (4) an seiner Ausmündung an der Behälteröffnung (5) mit einem eines Behälterverschluss (14) bildenden Tauchrohrverschluss (9) abschließbar ist.

9. Ortungssystem (15) nach einem der Ansprüche 1 bis 8, **dadurch gekennzeichnet, dass** das Entnahmesystem (1) einen an die Behälteröffnung (5) eines Behälters (3) anschließbaren Entnahmekopf (2) aufweist, wobei über den Entnahmekopf (2) Lagergut aus dem Behälter (3) entnehmbar oder diesem zuführbar ist.

10. Ortungssystem (15) nach einem der Ansprüche 1 bis 9, **dadurch gekennzeichnet, dass** mit den Standortinformationen eines Behälters (3) eine Kennung des jeweiligen Behälters (3) gesendet wird, wobei in dem cloudbasierten Rechnersystem (16) eine Standortinformation eines Behälters (3) zusammen mit der Kennung des Behälters (3) gespeichert wird.

11. Ortungssystem (15) nach Anspruch 10, **dadurch gekennzeichnet, dass** mittels der Kennung der jeweilige Behälter (3) identifizierbar ist.

12. Ortungssystem (15) nach einem der Ansprüche 10 oder 11, **dadurch gekennzeichnet, dass** mittels der Kennung das im Behälter (3) vorhandene Lagergut identifizierbar ist.

13. Ortungssystem (15) nach einem der Ansprüche 1 bis 12, **dadurch gekennzeichnet, dass** die Standortinformationen über das Internet gesendet werden.

14. Ortungssystem (15) nach einem der Ansprüche 1 bis 13, **dadurch gekennzeichnet, dass** die Standortinformationen über ein Mobilfunknetz gesendet werden.

15. Ortungssystem (15) nach einem der Ansprüche 1 bis 14, **dadurch gekennzeichnet, dass** in dem cloudbasierten Rechnersystem (16) gespeicherte Standortinformationen von Behältern (3) mittels einer Anwendereinheit (17) abgerufen werden.

16. Ortungssystem (15) nach Anspruch 15, **dadurch gekennzeichnet, dass** das Endgerät ein mobiles Endgerät ist.

17. Verfahren zum Betrieb eines Ortungssystems (15) für Behälter (3), wobei die Behälter (3) jeweils wenigstens eine Behälteröffnung (5) zur Zufuhr oder Entnahme von Lagergut aufweisen, **dadurch gekennzeichnet, dass** für jeden Behälter (3) ein Behälterverschluss (14) vorhanden ist, der zum Verschließen der Behälteröffnung (5) ausgebildet ist, und dass in einer Kapselung (11) des Behälterverschlusses (14) oder in einem am Behälterverschluss (14) ausmündenden Tauchrohr (4) ein GPS-Tracker (10) vorhanden ist, welcher zur Bestimmung von Standortinformationen des Behälters (3) ausgebildet ist, und dass mittels des GPS-Trackers (10) die Standortinformationen an ein cloudbasiertes Rechnersystem (16) gesendet werden.
